Europäisches Patentamt

European Patent Office

Office européen des brevets

(11) Veröffentlichungsnummer: **0 356 563**
**A1**

## (12) EUROPÄISCHE PATENTANMELDUNG

(21) Anmeldenummer: **88114325.9**

(22) Anmeldetag: **02.09.88**

(51) Int. Cl.5: **G01N 3/06 , G01B 11/16**

(43) Veröffentlichungstag der Anmeldung:
**07.03.90 Patentblatt 90/10**

(84) Benannte Vertragsstaaten:
**AT BE CH DE ES FR GB GR IT LI LU NL SE**

(71) Anmelder: **CARL SCHENCK AG**
**Landwehrstrasse 55 Postfach 40 18**
**D-6100 Darmstadt(DE)**

(72) Erfinder: **Klaus, Carsten, Dipl.-Ing.**
**Feldbergstrasse 9**
**D-6108 Weiterstadt 3(DE)**
Erfinder: **Gernhart, Peter**
**Bergstrasse 1**
**D-8763 Klingenberg(DE)**
Erfinder: **Keller, Günter**
**Am Felsenkeller 47**
**D-6101 Modautal 1(DE)**
Erfinder: **Misniker, Edgar**
**Grillparzerstrasse 107**
**D-6100 Darmstadt-Arheilgen(DE)**

(74) Vertreter: **Brandt, Ernst-Ulrich**
**Fa. Carl Schenck AG Patentabteilung**
**Landwehrstrasse 55 Postfach 40 18**
**D-6100 Darmstadt 1(DE)**

(54) **Verfahren und Messvorrichtung zur Ermittlung von Risslängen und/oder von Dehnungen an Bauteilen, Proben oder dgl.**

(57) Ein Verfahren zur Ermittlung von Rißlängen und/oder von Dehnungen an Bauteilen, Proben oder dgl., bei dem ein Lichtstrahl durch einen Scanner-Spiegel umgelenkt und zu der Probe geführt wird und aus dem von der Probe beeinflußten Lichtstrahl die gesuchten Meßwerte gewonnen werden sowie eine Meßvorrichtung zur Durchführung des Verfahrens sollen vereinfacht werden und für unterschiedliche Meßprobleme einsetzbar sein. Dies wird dadurch erreicht, daß der durch die Probe (1) beeinflußte Lichtstrahl (3a, 3b) auf einen Positionsdetektor (5) gelenkt wird und daß die durch den Lichtstrahl (3b) auf dem Positionsdetektor (5) erzeugte Information in einer Auswerteelektronik (6) ausgewertet wird. Der Lichtstrahl (3a) kann hierbei von der Probe (1) reflektiert oder durch eine an der Probe angeordnete Blende (8a, 8b) beeinflußt werden. Eine Meßanordnung zur Durchführung des Verfahrens ist angegeben.

Fig. 1

## Verfahren und Meßvorrichtung zur Ermittlung von Rißlängen und/oder von Dehnungen an Bauteilen, Proben oder dgl.

Die Erfindung betrifft ein Verfahren zur Ermittlung von Rißlängen und/oder von Dehnungen an Probenkörpern, bei dem ein Lichtstrahl durch einen Scanner-Spiegel umgelenkt und zu der Probe geführt wird und aus dem von der Probe beeinflußten Lichtstrahl die gesuchten Meßwerte gewonnen werden sowie eine Meßvorrichtung mit einer Lichtquelle, einer Umlenkspiegelanordnung mit einem Scanner-Spiegel und einer Vorrichtung für die Auswertung des umgelenkten und von der Probe beeinflußten Lichtstrahls, zur Durchführung des Verfahrens.

Ein Verfahren zur photo-elektrischen berührungslosen Messung von mit Ortsverschiebungen verbundenen Dehnungsabläufen im Zugversuch an lichtstreuenden, opaken oder transparenten Werkstoff- bzw. Objektoberflächen ist aus der EP-B1-00 23 643 bekannt. Hierbei wird mittels einer Beleuchtungseinrichtung ein Beleuchtungsstrahl, z. B. ein Laserstrahl hoher Strahlungsdichte, sowie mittels einer Projektionsoptik auf der Objektoberfläche ein Abtastfleck erzeugt. Mit Hilfe eines komplizierten Abtast- und Auswerteverfahrens wird der Dehnungsablauf rekonstruiert.

Bei einem Verfahren und einer Anordnung zur berührungslosen Messung von Längenänderungen an Bauteilen mit einer Laser-Lichtquelle und einer Signalverarbeitungseinrichtung werden Blenden verwendet, deren Querschnitt oder Meßspalt durch die zu messende Längenänderung beeinflußbar ist. Die durch den Blendenquerschnitt beeinflußte Lichtintensität wird erfaßt, in ein elektrisches Signal umgewandelt und als Längenänderung ausgewertet (EP-A1-0 255 552).

Bei einem weiteren Verfahren (Bisher nicht veröffentlichte deutsche Patentanmeldung P 37 20 248) zur Messung von Verformungen an Proben oder Prüfkörpern in Prüfmaschinen werden an der Probe angeordnete Umlenkspiegel verwendet, die den Lichtstrahl einer Lichtquelle auf Positionsdetektoren leiten, die mit einer Auswerteelektronik verbunden sind. Dadurch können Dehnungen der Probe oder Verformungen an der Probe erfaßt werden.

Es ist Aufgabe der vorliegenden Erfindung, ein vereinfachtes Verfahren sowie eine Meßvorrichtung zur Ermittlung von Rißlängen und/oder von Dehnungen an Probenkörpern anzugeben, das vielseitig einsetzbar ist. Diese Aufgabe wird durch die in den Patentansprüchen angegebenen Merkmale gelöst. Die Ansprüche betreffen auch vorteilhafte Ausgestaltungen der Erfindung.

Durch die Verwendung eines Positionsdetektors und einer Auswerteelektronik zur Erfassung und Auswertung der auf dem Positionsdetektor durch den vom Scanner-Spiegel kommenden Lichtstrahl erzeugten Information, wobei der Lichtstrahl von der Probe direkt beeinflußt wird, ergibt sich ein einfaches Meßverfahren, das für verschiedene Meßprobleme, z. B. zur Messung von Dehnungen, von Längenänderungen und des Rißfortschritts einsetzbar ist. Der Lichtstrahl kann hierbei von der Probe reflektiert oder durch eine an der Probe angeordnete Blende geführt werden. Meßanordnungen zur Durchführung des beanspruchten Verfahrens sind angegeben.

Die Erfindung wird an Ausführungsbeispielen in der Zeichnung schematisch dargestellt und in der Beschreibung näher erläutert. Es zeigen:

Fig. 1: eine Anordnung zur Rißlängenmessung,

Fig. 2: eine Anordnung zur Dehnungsmessung bei einer Zugprobe,

Fig. 3: eine Anordnung zur Querdehnungsmessung.

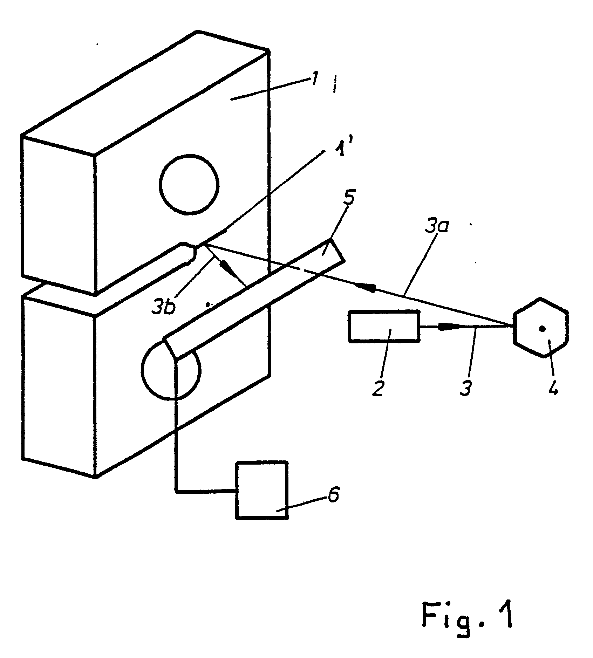

In Fig. 1 ist eine CT-Probe 1 (Compact-Tension-Probe) erkennbar, bei der an einer Meßstelle die Länge eines Risses 1' ermittelt werden soll. Hierzu wird aus einer Lichtquelle 2 ein punktförmiger, schmalbandiger oder polarisierter Lichtstrahl 3, z. B. ein Laser-Strahl, auf einen Scanner-Spiegel 4 geführt. Der Scanner-Spiegel kann als rotierender oder schwingender Spiegel ausgebildet sein. Er ist so angeordnet, daß der Lichtstrahl 3a die Meßstelle an der Probe, z. B. einen Riß 1', der vorhanden ist oder erwartet wird, überstreicht. Darüber hinaus wird der Lichtstrahl 3a vom Scanner-Spiegel in einem bestimmten Winkel auf die Probe 1 geworfen. Ist an der Meßstelle kein Defekt vorhanden, wird der Lichtstrahl seinem Einfallswinkel entsprechend von der Probe abgelenkt. Bei Vorhandensein eines Risses wird der Lichtststrahl jedoch in einem völlig anderen Winkel zurückgeworfen. Im Strahlengang des zurückgeworfenen Lichtstrahls 3b ist ein Positionsdetektor 5 angeordnet. In Verbindung mit einer Auswerteelektronik 6 kann aus der auf dem Positionsdetektor 5 durch den Lichtstrahl 3b erzeugten Information die Rißlänge bestimmt werden.

Der Positionsdetektor ist als photo-elektrischer Detektor ausgebildet und weist positionsauflösende lichtempfindliche Elemente oder Photodioden auf. Diese Elemente wandeln die Lichtstrahlung in elektrische Signale, z. B. in Strom- oder Spannungssignale um, die direkt abhängig sind von der durch den Lichtstrahl erzeugten In formation. Im vorliegenden Fall bildet der von der Probe zurückgeworfene und vom Positionsdetektor 5 empfangene Lichtstrahl 3b auf dem Positionsdetektor einen Lichtstrich oder ein schmales Lichtband ab. Dieser Lichtstrich entspricht in seiner Länge der interesierenden Rißlänge. Die vom Positionsdetektor abgegebenen Strom- oder Spannungssignale entsprechen der Länge des empfangenen Lichtstreifens und sind daher ein direktes Maß für die Rißlänge 1 an der Probe 1.

Der Positionsdetektor 5 kann als analog oder digital arbeitender Detektor ausgebildet sein. Die Auswerteelektronik 6 ist jeweils entsprechend angepaßt. Bei Verwendung von digitalen Detektoren können die einzelnen Photoelemente des Detektors so ausgebildet werden, daß sie erst bei Überschreiten eines bestimmten Spannungspegels ansprechen. Hierdurch kann der störende Streulichteinfluß unterdrückt werden.

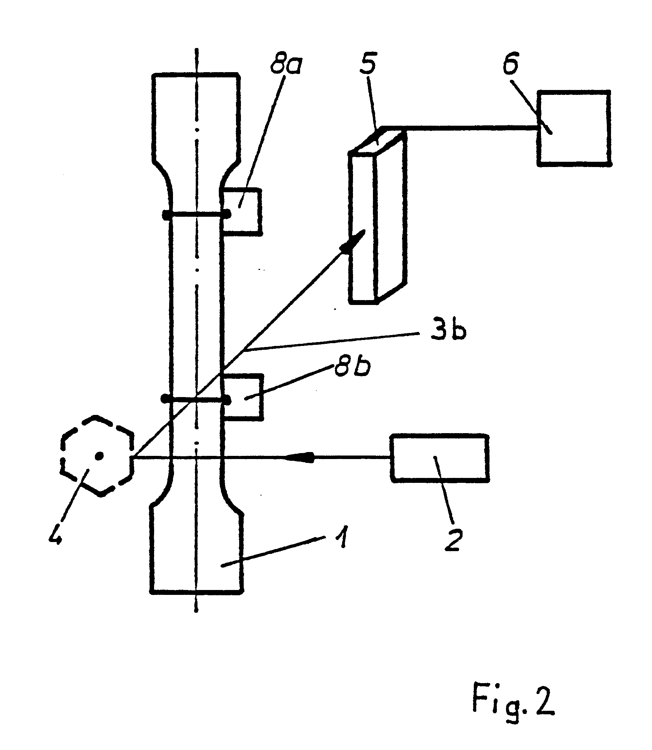

Fig. 2 zeigt eine Meßanordnung zur axialen Dehnungsmessung bei Zugproben. Lichtquelle 2, Scanner-Spiegel 4, Positionsdetektor 5 und Auswerteelektronik 6 ensprechen dem Ausführungsbeispiel nach Fig. 1. Zur Erfassung der Dehnung an der Zugprobe 1 sind Blenden 8a, 8b z. B. federelastisch an der Probe befestigt. Der vom Scanner-Spiegel 4 abgelenkte Lichtstrahl 3b wird durch die beiden Blenden 8a, 8b auf dem Positionsdetektor 5 abgeschattet bzw. begrenzt. Der lichte Blendenabstand entspricht der Meßbasis, z. B. der Dehnung 0 an der Probe. Bei Dehnungen der Probe vergrößert sich der Blendenabstand und entsprechend die Länge des auf den Positionsdetektor geworfenen Lichtstrichs. In der Auswerteelektronik 6 wird aus den Signalen des Positionsdetektors die Längenänderung bzw. Dehnung der Probe 1 ermittelt.

Die angegebene Blendenanordnung ist prinzipieller Art. Es sind auch andere Blendenanordnungen möglich, die an das jeweilige Meßproblem angepaßt sind. Die Blenden können beispielsweise so angeordnet sein, daß Drehwinkelmessungen möglich sind. Der vom Scanner-Spiegel abgelenkte Lichtstrahl verläuft in diesem Fall im wesentlichen parallel zur Drehachse. Der Positionsdetektor wird entsprechend im Strahlengang des durch die Blenden begrenzten Lichtstrahls angeordnet.

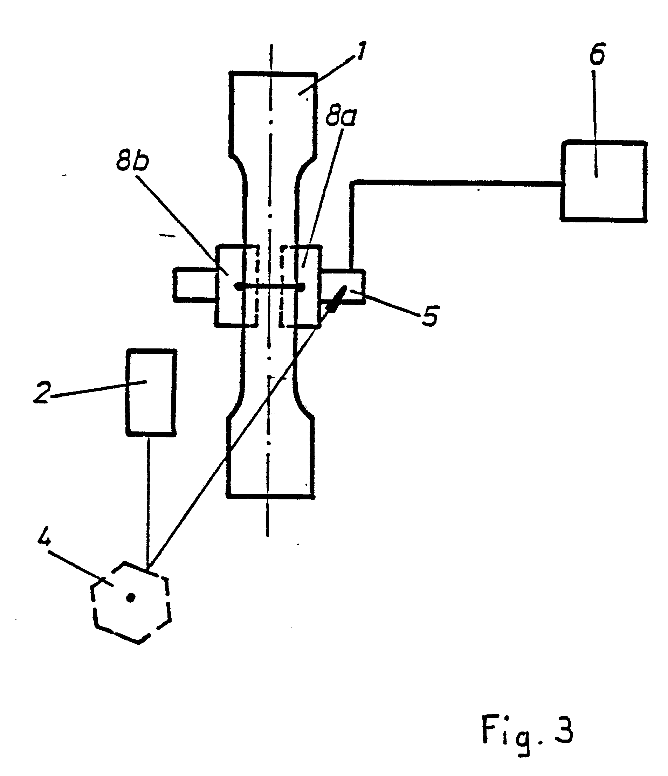

Eine Meßanordnung zur Querdehnungsmessung ist in Fig. 3 dargestellt. An der Probe 1, einer Zugprobe sind Blenden 8a, 8b angeordnet. In diesem Fall wird die Meßstrecke, die aus den beiden Blenden und der Probe 1 gebildet wird, am Positionsdetektor 5 abgeschattet. Die Auswerteelektronik 6 wird hierbei so modifiziert, daß aus der sich vergrößernden oder verkleinernden Abschattung das der Querdehnung proportionale Meßsignal ermittelt wird.

## Ansprüche

1. Verfahren zur Ermittlung von Rißlängen und/oder von Dehnungen an Bauteilen, Proben oder dgl., bei dem ein Lichtstrahl durch einen Scanner-Spiegel umgelenkt und zu der Probe geführt wird und aus dem von der Probe beeinflußten Lichtstrahl die gesuchten Meßwerte gewonnen werden, dadurch gekennzeichnet, daß der durch die Probe (1) beeinflußte Lichtstrahl (3a, 3b) auf einen Positionsdetektor (5) gelenkt wird und daß die durch den Lichtstrahl (3b) auf dem Positionsdetektor (5) erzeugte Information in einer Auswerteelektronik (6) ausgewertet wird.

2. Verfahren nach Anspruch 1, dadurch gekennzeichnet, daß der Lichtstrahl (3a) von einer Meßstelle an der Probe (1) reflektiert, durch eine an der Probe (1) angeordnete Blende (8a, 8b) geführt oder durch die Blende (8a, 8b) abgeschattet wird.

3. Verfahren nach Anspruch 1 oder 2, dadurch gekennzeichnet, daß die auf dem Positionsdetektor (5) erzeugte Information einer Fehlerkorrektur unterzogen wird.

4. Meßvorrichtung zur Ermittlung von Rißlängen und/oder von Dehnungen an Bauteilen, Proben oder dergleichen, mit einer Lichtquelle, einer Umlenkspiegelanordnung mit einem Scanner-Spiegel und einer Vorrichtung für die Auswertung des umgelenkten und von der Probe beeinflußten Lichtstrahls, zur Durchführung des Verfahrens nach einem der vorhergehenden Ansprüche, dadurch gekennzeichnet, daß die Vorrichtung zur Auswertung des Lichtstrahls (3b) als Positionsdetektor (5) ausgebildet und so angeordnet ist, daß der von einer Meßstelle an der Probe (1) reflektierte oder durch eine Blende (8a, 8b) an der Probe (1) beeinflußte Lichtstrahl empfangen wird, und daß der Positionsdetektor (5) mit einer Auswerteelektronik (6) verbunden ist, in der die durch den Lichtstrahl (3b) auf dem Positionsdetektor (5) erzeugte Information ausgewertet wird.

5. Meßvorrichtung nach Anspruch 4, dadurch gekennzeichnet, daß die Blende (8a, 8b) zumindest teilweise durch die Probe (1) selbst gebildet wird.

6. Meßvorrichtung nach Anspruch 4 oder 5, dadurch gekennzeichnet, daß der Positionsdetektor (5) als analoger oder digitaler Detektor ausgebildet ist.

7. Meßvorrichtung nach einem der Ansprüche Ansprüche 4 bis 6, dadurch gekennzeichnet, daß die Information des Positionsdetektors (5) in der Auswerteelektronik (6) als Rißlänge, Längs- oder Querdehnung oder Verdrehung bzw. Drehwinkel der Probe (1) ermittelt und/oder angezeigt wird.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | EP-A-0 023 643 (MFL PRUEF- UND MESSSYSTEME GMBH) <br> * Zusammenfassung * <br> --- | 1-7 | G 01 N 3/06 <br> G 01 B 11/16 |
| Y | US-A-4 690 001 (D.N. HARVEY et al.) <br> * Spalte 1, Zeilen 23-32; Spalte 2, Zeilen 15-62 * <br> --- | 1-7 | |
| A | EP-A-0 194 354 (FRAUNHOFER-GESELLSCHAFT ZUR FOERDERUNG DER ANGEWANDTEN FORSCHUNG E.V.) <br> * Zusammenfassung; Figur 1 * <br> --- | 1,4 | |
| A | DE-A-2 048 870 (STAMICARBON N.V.) <br> * Ansprüche 1,5-7 * <br> --- | 1,4 | |
| A,D | EP-A-0 255 552 (CARL SCHENCK AG) <br> * Zusammenfassung * <br> ----- | 1 | |

| RECHERCHIERTE SACHGEBIETE (Int. Cl.4) |
|---|
| G 01 N 3/00 <br> G 01 B 11/00 |

Der vorliegende Recherchenbericht wurde für alle Patentansprüche erstellt

| Recherchenort | Abschlußdatum der Recherche | Prüfer |
|---|---|---|
| BERLIN | 17-04-1989 | BRISON O.P. |